# EUROPÄISCHE PATENTSCHRIFT

(11) **EP 3 054 824 B1**
(45) Veröffentlichungstag und Bekanntmachung des Hinweises auf die Patenterteilung: **02.01.2019**
(21) Anmeldenummer: 14786799.8
(22) Anmeldetag: 06.10.2014
(51) Int. Cl.: A47J 37/12, B01D 24/00, B01D 29/01, B01D 29/05, C11B 3/00

(54) **VERFAHREN UND VORRICHTUNG ZUM FILTERN VON FRITTIEROEL**
PROCESS AND DEVICE FOR FILTERING FRYING OIL
PROCEDE ET DISPOSITIF POUR LE FILTRAGE DE HUILE DE FRITURE

(30) Priorität: 07.10.2013 DE 102013111061
(43) Veröffentlichungstag der Anmeldung: 17.08.2016
(73) Patentinhaber: VITO AG, 78532 Tuttlingen (DE)
(72) Erfinder: SCHMIDT, Andreas, 78532 Tuttlingen (DE)
(74) Vertreter: Patentanwälte und Rechtsanwalt Weiß, Arat & Partner mbB
(86) Internationale Anmeldenummer: PCT/EP2014/002712
(87) Internationale Veröffentlichungsnummer: WO 2015/051904

(56) Entgegenhaltungen:
- US-A- 3 355 026
- US-A- 4 043 916
- US-A- 4 282 094
- US-A- 5 839 360
- US-A1- 2004 058 043
- US-A1- 2012 318 753
- US-B1- 7 938 959

## Beschreibung

Die Erfindung betrifft ein Verfahren zum Reinigen eines insbesondere öligen Mediums aus dem Lebensmittelbereich, insbesondere Frittieröl, mittels eines Filters in einem geschlossenen Gehäuse, sowie eine Vorrichtung hierfür.

### Stand der Technik

Die Reinigung von insbesondere öligen Medien spielt heute in vielen Bereichen eine grosse Rolle, da die Entsorgung von verunreinigtem Öl erhebliche Probleme und Kosten bereitet. Dies gilt vor allem auch im Lebensmittelbereich und dort vor allem für Frittieröl. So wird bspw. in der DE 100 49 635 A eine Vorrichtung zum Reinigen von Speiseölen beschrieben, die als kompakte Einheit in das Öl einsetzbar ist. Über eine Pumpe wird das Öl in die Vorrichtung eingesaugt, durch einen Filter gedrückt und wieder in das gleiche Ölbad entlassen. Diese Vorrichtung ist hervorragend für kleinere Ölmengen geeignet.

Aus der DE 32 35 142 A ist wiederum eine Vorrichtung zum Filtrieren von Speiseöl bzw. Speisefett in einem Zubereitungsgefäss bekannt, bei dem ein Filterelement relativ zu einem Sammelgefäss so angeordnet wird, dass es das zu filtrierende Öl aufnehmen und das filtrierte Öl in das Sammelgefäss abgeben kann, nachdem dieses durch das Filterelement filtriert worden ist. Dabei wird eine Pumpvorrichtung betätigt, um das Öl zum Zubereitungsgefäss in das Filterelement abzupumpen. Durch die Pumpe werden bspw. Verunreinigungen im Öl nochmals zerkleinert, so dass das Filterelement wesentlich schneller verstopft. Ausserdem finden durch das Pumpen Verwirbelungen statt, so dass die Filteroberfläche nicht gleichmässig angeströmt wird.

Aus der US 3 355 026 A geht ein Verfahren und eine Vorrichtung zum Reinigen eines öligen Mediums aus dem Lebensmittelbereich mittels einem Filter in einem geschlossenen Gehäuse hervor. Dabei besitzt das Gehäuse am Gehäuseboden einen Anschluss an eine Vakuumpumpe, so dass das Medium über Erzeugung eines Vakuums unterhalb des Filters durch den Filter hindurch angesaugt wird.

### Aufgabe

Aufgabe der vorliegenden Erfindung ist es, das Filtrieren von öligen Medien wesentlich zu verbessern und einfacher auszugestalten.

### Lösung der Aufgabe

Zur Lösung der Aufgabe führt, dass das Medium durch Erzeugen eines Unterdrucks im Gehäuse vor dem Filter angesaugt wird.

Das bedeutet, dass das zu reinigende Medium von der Entnahmestelle bis zum Filter berührungslos transportiert wird, was gleichzeitig bedeutet, dass die Verunreinigungen selbst z.B. nicht zerschlagen werden. Grössere Verunreinigungsstücke bleiben erhalten und können so wesentlich leichter ausgefiltert werden. Die Filter setzen sich auch nicht so schnell zu.

Ferner hat sich herausgestellt, dass das Ansaugen die Flüssigkeit wesentlich weniger verwirbelt, sondern sie im Gegenteil sehr gleichmässig über die Filterfläche verteilt. Das bedeutet, dass sich der Filter auch gleichmässig zusetzt und nicht, wie beim Stand der Technik, einzelne Bereiche schneller zugesetzt werden, so dass diese Filter auch schneller ausgetauscht werden müssen.

Das Medium wird vor dem Filter angesaugt. Das bedeutet, dass nicht direkt durch den Filter hindurchgesaugt wird und nur auf Grund eigener Gravitation gefiltert wird. Dies ergibt einen sehr schönen und gleichmässigen Filterkuchen. Des weiteren wird der Ansaugstrom ferner gleichmässig, da er nicht durch einen sich langsam zusetzenden Filter vermindert wird. Es wird immer ein gleichmäßiger Saugdruck aufrechterhalten.

Im unteren Bereich des Gehäuses sammelt sich unterhalb des Filters das gereinigte Medium an und wird dann erfindungsgemäss wieder normal zur weiteren Verwendung zurückgepumpt.

Vorrichtungstechnisch gesehen ist somit dem Gehäuse eine Saugeinrichtung zugeordnet, die bevorzugt eine Turbine ist. Selbstverständlich sind auch andere Möglichkeiten zur Erzeugung eines Unterdrucks denkbar und sollen von der Erfindung umfasst sein.

Diese Saugeinrichtung ist dann mit einer entsprechenden Ansaugöffnung bzw. einem Anschlussnippel mit dem Gehäuse verbunden, wobei, diese

Ansaugöffnung durch bspw. einen Schnorchel oberhalb des Filters angeordnet wird.

Ein Einlass für das zu reinigende Medium ist selbstverständlich oberhalb des Filters angeordnet. Dieser Einlass ist dann mit einer Entnahmelanze verbunden. Im bevorzugten Ausführungsbeispiel dient die Entnahmelanze sowohl der Entnahme des zu reinigen Mediums als auch der Rückführung. Für die Entnahmelanze ist an dem Gehäuse eine Öffnung vorgesehen, in welche die Entnahmelanze zum Transport eingesteckt werden kann.

Die Schaltung zwischen Turbine und Pumpe, d. h. zwischen Ansaugung und Rückführung geschieht über ein sehr einfach ausgestaltetes Wechselventil, welches bevorzugt handbetätigt ist. Durch das Wechselventil wird die Entnahmelanze mal mit einem Einlass für das zu reinigende Medium, mal mit einer Entnahmeöffnung für das gereinigte Medium verbunden.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figur 1** eine perspektivische Darstellung von Teilen der erfindungsgemässen Vorrichtung zum Reinigen eines insbesondere öligen Mediums in Explosionsdarstellung;
**Figur 2** eine perspektivische Ansicht der Vorrichtung gemäss Figur 1 in Zusammenbaulage mit abgenommenem Gehäuseblech;
**Figur 3** eine Frontansicht der erfindungsgemässen Vorrichtung gemäss Figur 2 mit abgenommenen Innenrahmenblech;
**Figur 4** eine Seitenansicht der erfindungsgemässen Vorrichtung in einem schematisch dargestellten Längsschnitt;
**Figur 5** einen Ausschnitt aus der erfindungsgemässen Vorrichtung gemäss Figur 2.

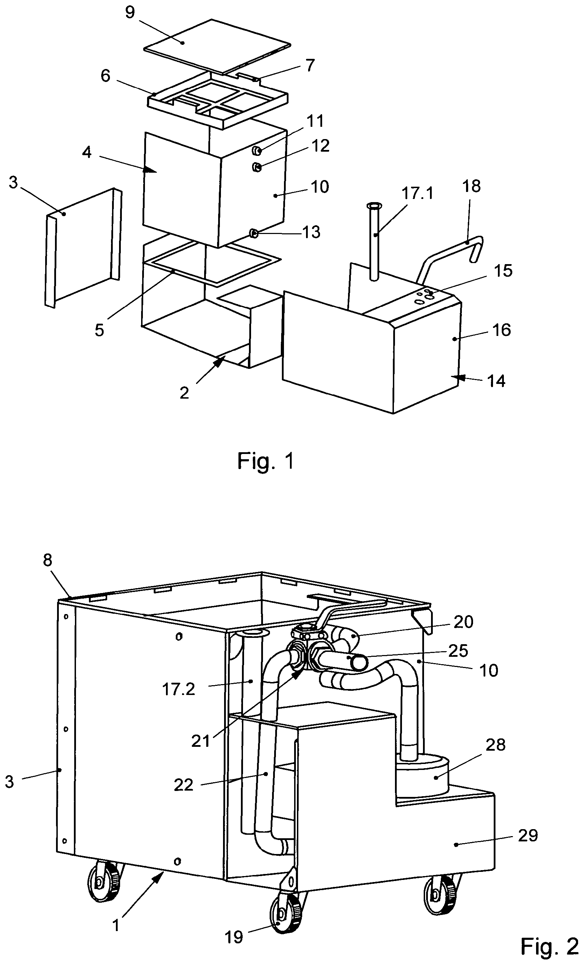

Gemäss Figur 2 weist eine erfindungsgemässe Vorrichtung zum Reinigen eines insbesondere öligen Mediums ein Gehäuse 1 auf, welches gemäss Figur 1 aus einzelnen Teilen zusammengesetzt ist. Kernstücke sind ein Bodenblech 2, eine Rückwand 3 und ein U-Rahmen 4, welche zusammengesetzt das Gehäuse 1 gemäss Figur 2 ausbilden.

In den oberen Bereich des Gehäuse 1 ist ein Rahmen 5 eingesetzt, welcher der Halterung eines Filterträgers 6 dient. In diesen Filterträger 6 kann ein Filter eingelegt werden. Des weiteren weist diese Filterträger 6 Handgriffe 7 auf, mit denen der Filterträger 6 aus dem Gehäuse 1 entnommen und gereinigt werden kann.

Eine obere Randkante des Gehäuses 1 umläuft eine Dichtung 8, auf die ein Deckel 9 aufgelegt werden kann, so dass ein Innenraum des Gehäuses 1 relativ dicht verschlossen ist.

Auf einer Frontseite 10 des U-Rahmens 4 befindet sich ein Einlassmittel 11, ein Anschlussnippel 12 und ein Entnahmenippel 13.

Auf das Gehäuse 1 wird von vorne ein Gehäuseblech 14 aufgeschoben, welches den U-Rahmen umschliesst und durch ein Armaturenblech 15 einen Abstand von der Frontseite 10 herstellt, wodurch ein Raum zwischen Frontseite 10 und einer Frontwand 16 des Gehäuseblechs 14 gebildet wird, in dem sich wesentliche Funktionselemente der Vorrichtung befinden.

Angedeutet ist noch eine Halterung 17.1 für einen Wagengriff 18, wobei die zweite Halterung gegenüber 17.2 in Figur 2 dargestellt ist.

Die gesamten Bauelemente gemäss Figur 1 bilden in Zusammenbaulage eine Einheit, die auf Rollen 19 fahrbar ist und über den Wagengriff 18 bewegt werden kann.

Gemäss den Figuren 2 bis 4 schliesst an den Einlassnippel 11 ein Schlauchwinkelstück 20 an, welches mit einem Ventil 21 in Verbindung steht. Gegenüberliegend von dem Schlauchwinkelstück 20 führt ein Schlauchstück 22 zu einer Pumpe 23. Von der Pumpe 23 führt ein Anschlussschlauch 24 zum Entnahmenippel 13.

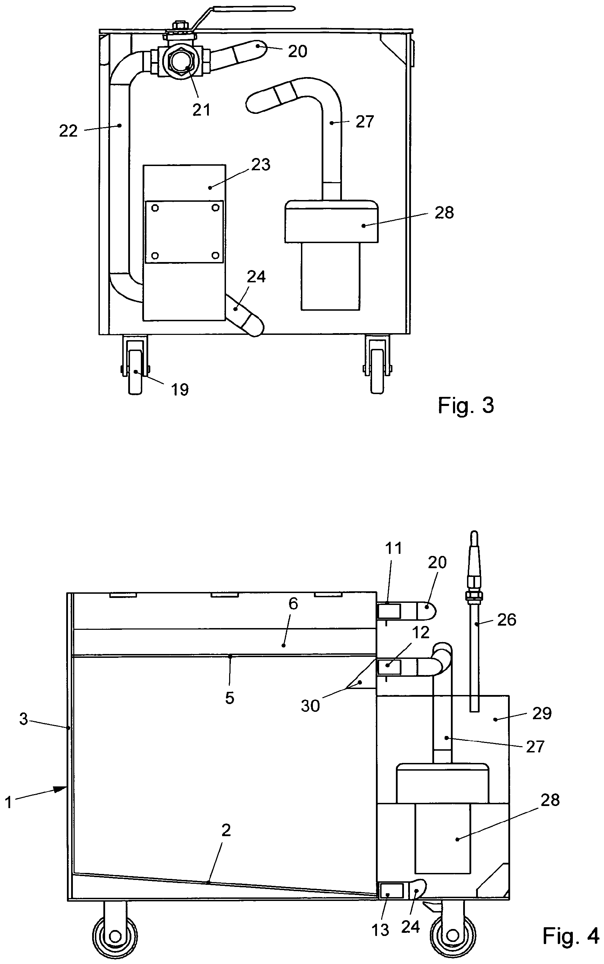

Ein dritter Anschluss 25 ist mit einer Entnahmelanze 26 verbunden, deren Kopfbereich in Figur 4 angedeutet ist. Allerdings ist die Schlauchverbindung zwischen dem Anschluss 25 und dem Kopfbereich 26 nicht gezeigt. Die Entnahmelanze 26 steckt im übrigen in einer entsprechenden Öffnung in dem Armaturenblech 14 und wird mit der gesamten Einheit mitgeführt.

An den Anschlussnippel 12 schlussendlich schliesst ein Winkelschlauch 27 an, der mit einer Turbine 28 verbunden ist. Turbine 28 und Pumpe 23 sind von einem Innenrahmenblech 29 überdeckt.

Die Funktionsweise der vorliegenden Erfindung ist Folgende:
Zur Entnahme von z.B. zu reinigendem Frittieröl wird die Entnahmelanze 26 aus dem Gehäuseblech 14 gezogen und in das Öl eingetaucht. Nunmehr wird die Turbine 28 in Gang gesetzt, so dass im Innenraum des Gehäuse 1 ein Unterdruck erzeugt wird. Dies kann unterhalb des Rahmens 5 geschehen, wobei in diesem Fall, wie in Figur 4 gezeigt, der Anschlussnippel 12 von einem Schutzblech 30 abgedeckt ist.

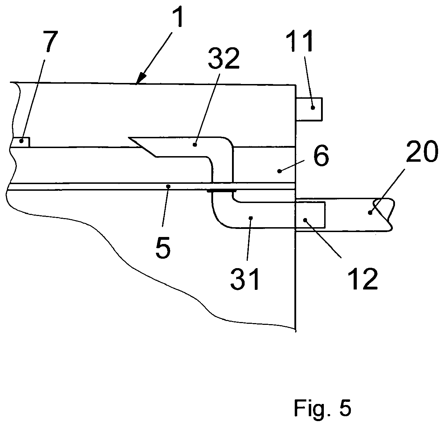

Eine andere Möglichkeit ist in Figur 5 dargestellt. Dort wird gezeigt, dass von dem Einlassnippel 11 in das Gehäuse 1 ein Rohrwinkel 31 führt. Dieser steht in lösbarer Verbindung mit einem Schnorchel 32, der sich oberhalb des Rahmens 5 für den Filterträger 6 erstreckt. Dabei ist der Filterträger 6 so ausgestaltet, dass bei seinem Einsetzen in das Gehäuse 1 der Schnorchel 32 automatisch auf den Rohrwinkel 31 aufgesetzt wird.

Wird nun die Turbine 28 in Gang gesetzt, wird in dem Gehäuse 1 ein Unterdruck erzeugt über den zu reinigendes Medium durch die Entnahmelanze 26 und über das Schlauchwinkelstück 20 bzw. den Einlassnippel 11 in das Innere des Gehäuses 1 gesaugt wird. Hierdurch wird gewährleistet, dass dem zu reinigenden Öl auf seinem Weg vom Kopf der Entnahmelanze 26 bis zu dem Filter auf dem Filterträger 6 kein Widerstand entgegengesetzt wird, sodass auch grössere Verunreinigungen nicht zerschlagen werden. Ferner hat sich in der Praxis herausgestellt, dass das zu reinigende Medium ideal über die Oberfläche des Filters auf den Filterträger 6 verteilt und, sofern das Vakuum unterhalb des Filters erzeugt wird, sanft und gleichmässig durch den Filter gesaugt wird. Hierdurch entsteht ein sehr ausgeglichener Filterkuchen, der durch diese Saugwirkung bereits vorgetrocknet wird.

Bei bestimmten Medien und in vielen Fällen hat es sich aber auch als sehr wirkungsvoll erwiesen, wenn die Erzeugung des Vakuums oberhalb der Filteroberfläche stattfindet, so dass da zu filternde Medium durch den Filter unter seiner Schwerkraft hindurchtropft. Hierdurch wird vor allem die Saugkraft durch einen sich zu setzenden Filter nicht beeinflusst. Beide Möglichkeiten sind denkbar und sollen vom Erfindungsgedanken umfasst sein.

Das gefilterte Medium sammelt sich oberhalb des Bodenblechs 2 an und kann nun, bevorzugt, von Zeit zu Zeit entnommen und zurückgeführt werden. Dies geschieht dadurch, dass das Ventil 21 umgestellt und die Pumpe 23 in Gang gesetzt wird. Diese Pumpe 23 saugt durch den Entnahmenippel 13 das gereinigte Medium an, welches den Anschlussschlauch 24 und das Schlauchstück 22 durchströmt. Da der Weg zu dem Schlauchwinkelstück 20 verschlossen ist, durchströmt das gereinigte Medium den Anschluss 25 zu der Entnahmelanze 26.

Alle Teile der Vorrichtung sind aus leicht zu reinigendem Material, die wesentlichen Teile aus Edelstahl. Die gesamte Vorrichtung ist so zusammengesetzt, dass sie auch leicht auseinandergenommen und gereinigt werden kann.

**Bezugszeichenliste**

| | | | |
|---|---|---|---|
| 1 | Gehäuse | 34 | 67 |
| 2 | Bodenblech | 35 | 68 |
| 3 | Rückwand | 36 | 69 |
| 4 | U-Rahmen | 37 | 70 |
| 5 | Rahmen | 38 | 71 |
| 6 | Filterträger | 39 | 72 |
| 7 | Hanggriff | 40 | 73 |
| 8 | Dichtung | 41 | 74 |
| 9 | Deckel | 42 | 75 |
| 10 | Frontseite | 43 | 76 |
| 11 | Einlassnippel | 44 | 77 |
| 12 | Anschlussnippel | 45 | 78 |
| 13 | Entnahmenippel | 46 | 79 |
| 14 | Gehäuseblech | 47 | |
| 15 | Armaturblech | 48 | |
| 16 | Frontwand | 49 | |
| 17 | Halterung | 50 | |
| 18 | Wagengriff | 51 | |
| 19 | Rollen | 52 | |
| 20 | Schlauchwinkelstück | 53 | |
| 21 | Ventil | 54 | |
| 22 | Schlauchstück | 55 | |
| 23 | Pumpe | 56 | |
| 24 | Anschlussschlauch | 57 | |
| 25 | Anschluss | 58 | |
| 26 | Entnahmelanze | 59 | |
| 27 | Winkelschlauch | 60 | |
| 28 | Turbine | 61 | |
| 29 | Innenrahmenblech | 62 | |
| 30 | Schutzblech | 63 | |
| 31 | Rohrwinkel | 64 | |
| 32 | Schnorchel | 65 | |
| 33 | | 66 | |

## Patentansprüche

1. Verfahren zum Reinigen eines insbesondere öligen Mediums aus dem Lebensmittelbereich, insbesondere Frittieröl, mittels einem Filter in einem geschlossenen Gehäuse (1),
**dadurch gekennzeichnet,**
**dass** das Medium durch Erzeugen eines Unterdrucks im Gehäuse (1) vor dem Filter angesaugt und auf Grund eigener Gravitation gefiltert wird.

2. Vorrichtung zur Durchführung des Verfahrens nach Anspruch 1, **dadurch gekennzeichnet, dass** zum Ansaugen des Mediums dem Gehäuse (1) eine Saugeinrichtung (28) zugeordnet ist und diese einen Anschluss (12) an das Gehäuse (1) unterhalb des Filters aufweist, wobei an den Anschluss (12) ein Schnorchel (32) anschliesst, der durch den Filter geführt ist und oberhalb des Filters ausmündet.

3. Vorrichtung nach Anspruch 2, **dadurch gekennzeichnet, dass** die Saugeinrichtung eine Turbine (28) ist.

4. Vorrichtung nach wenigstens einem der vorhergehenden Ansprüche, **dadurch gekennzeichnet, dass** ein Einlass (11) für das Medium oberhalb des Filters in das Gehäuse (1) einmündet.

5. Vorrichtung nach Anspruch 4, **dadurch gekennzeichnet, dass** der Einlass (11) mit einer Entnahmelanze (26) verbunden ist.

6. Vorrichtung nach wenigstens einem der vorhergehenden Ansprüche, **dadurch gekennzeichnet, dass** im unteren Teil des Gehäuses (1) eine Entnahmeöffnung (13) für das gereinigte Medium vorgesehen ist.

7. Vorrichtung nach Anspruch 6, **dadurch gekennzeichnet, dass** die Entnahmeöffnung (13) mit einer Pumpe (23) in Verbindung steht.

8. Vorrichtung nach Anspruch 7, **dadurch gekennzeichnet, dass** die Pumpe (23) ebenfalls mit der Entnahmelanze (26) verbunden ist.

9. Vorrichtung nach Anspruch 8, **dadurch gekennzeichnet, dass** Entnahmelanze (26) und Einlass (11) für das zu reinigende Medium und Entnahmeöffnung (13) für das gereinigte Medium über ein Wechselventil (21) miteinander in Verbindung stehen.

10. Vorrichtung nach wenigstens einem der vorhergehenden Ansprüche, **dadurch gekennzeichnet, dass** ein Gehäuseboden (2) geneigt ausgebildet ist.

11. Vorrichtung nach wenigstens einem der vorhergehenden Ansprüche, **dadurch gekennzeichnet, dass** der Filter in einem entnehmbaren Filterträger (6) im oberen Bereich des Gehäuses (1) vorgesehen ist.

12. Vorrichtung nach wenigstens einem der vorhergehenden Ansprüche, **dadurch gekennzeichnet, dass** das Gehäuse (1) mit einem Deckel (9) verschlossen ist.

13. Vorrichtung nach wenigstens einem der vorhergehenden Ansprüche, **dadurch gekennzeichnet, dass** das Gehäuse (1) fahrbar ist.

## Claims

1. Method for purifying an in particular oily medium from the food sector, in particular deep-frying oil, by means of a filter in a closed housing (1), **characterized in that** the medium is suctioned by generating a vacuum in the housing (1) in front of the filter and is filtered due to its own gravity.

2. Device for carrying out the method according to claim 1, **characterized in that** a suction means (28) is assigned to the housing (1) for suctioning the medium and said suction means has a connection (12) to the housing (1) below the filter, wherein a snorkel (32) is connected to the connection (12), said snorkel being passed through the filter and opening above the filter.

3. Device according to claim 2, **characterized in that** the suction means is a turbine (28).

4. Device according to at least one of the preceding claims, **characterized in that** an inlet (11) for the medium opens into the housing (1) above the filter.

5. Device according to claim 4, **characterized in that** the inlet (11) is connected to a removal lance (26).

6. Device according to at least one of the preceding claims, **characterized in that** a removal opening (13) for the purified medium is provided in the lower part of the housing (1).

7. Device according to claim 6, **characterized in that** the removal opening (13) is connected to a pump (23).

8. Device according to claim 7, **characterized in that** the pump (23) is also connected to the removal lance (26).

9. Device according to claim 8, **characterized in that** the removal lance (26) and the inlet (11) for the medium to be purified and the removal opening (13) for the purified medium are connected to one another via a shuttle valve (21).

10. Device according to at least one of the preceding claims, **characterized in that** a housing bottom (2) is configured in an inclined manner.

11. Device according to at least one of the preceding claims, **characterized in that** the filter is provided in a removable filter carrier (6) in the upper region of the housing (1).

12. Device according to at least one of the preceding claims, **characterized in that** the housing (1) is closed by a lid (9).

13. Device according to at least one of the preceding claims, **characterized in that** the housing (1) is movable.

## Revendications

1. Procédé de nettoyage d'un fluide en particulier huileux du domaine alimentaire, en particulier de l'huile de friture, au moyen d'un filtre dans un boîtier fermé (1), **caractérisé par le fait**
**que** le fluide est aspiré en générant une pression négative dans le logement (1) devant le filtre et est filtré par suite de sa propre force de gravitation.

2. Dispositif pour la mise en oeuvre du procédé selon la revendication 1, **caractérisé par le fait que** pour aspirer le fluide est associé au boîtier (1) un dispositif d'aspiration (28) et que ce dernier présente une connexion (12) au boîtier (1) au-dessous du filtre, à la connexion (12) venant se raccorder un tuba (32) qui est guidé à travers le filtre et débouche au-dessus du filtre.

3. Dispositif selon la revendication 2, **caractérisé par le fait que** le dispositif d'aspiration est une turbine (28).

4. Dispositif selon au moins l'une des revendications précédentes, **caractérisé par le fait qu'**une entrée (11) pour le fluide débouche au-dessus du filtre dans le boîtier (1).

5. Dispositif selon la revendication 4, **caractérisé par le fait que** l'entrée (11) est connectée à une lance de prélèvement (26).

6. Dispositif selon au moins l'une des revendications précédentes, **caractérisé par le fait que** dans la partie inférieure du boîtier (1) est prévue une ouverture de prélèvement (13) pour le fluide nettoyé.

7. Appareil selon la revendication 6, **caractérisé par le fait que** l'ouverture de prélèvement (13) est en communication avec une pompe (23).

8. Appareil selon la revendication 7, **caractérisé par le fait que** la pompe (23) est également connectée à la lance de prélèvement (26).

9. Appareil selon la revendication 8, **caractérisé par le fait que** la lance de prélèvement (26) et l'entrée (11) pour le fluide à nettoyer et l'ouverture de prélèvement (13) pour le fluide nettoyé communiquent entre elles par l'intermédiaire d'une soupape de commutation (21).

10. Dispositif selon au moins l'une des revendications précédentes, **caractérisé par le fait qu'**un fond de boîtier (2) est réalisé de manière inclinée.

11. Dispositif selon au moins l'une des revendications précédentes, **caractérisé par le fait que** le filtre est prévu dans un porte-filtre amovible (6) dans la zone supérieure du boîtier (1).

12. Dispositif selon au moins l'une des revendications précédentes, **caractérisé par le fait que** le boîtier (1) est obturé par un couvercle (9).

13. Dispositif selon au moins l'une des revendications précédentes, **caractérisé par le fait que** le boîtier (1) est mobile.
